# EUROPEAN PATENT APPLICATION

(11) **EP 4 583 655 A1**
(43) Date of publication of application: **09.07.2025**
(21) Application number: 24852933.1
(22) Date of filing: 28.10.2024
(51) Int. Cl.: H05K 9/00, H04M 1/02, H01Q 1/24, H05K 7/14, H05K 5/02

(54) **ELECTRONIC DEVICE INCLUDING CONDUCTIVE GASKET**

(30) Priority: 06.11.2023 KR 20230151480; 05.01.2024 KR 20240002073
(71) Applicant: Samsung Electronics Co., Ltd., Suwon-si, Gyeonggi-do 16677 (KR); Joinset Co., Ltd., Ansan-si, Gyeonggi-do 15613 (KR)
(72) Inventor: YUN, Yongbeen, Suwon-si, Gyeonggi-do 16677 (KR); GO, Kwangeun, Suwon-si, Gyeonggi-do 16677 (KR); LEE, Youngchul, Suwon-si, Gyeonggi-do 16677 (KR); CHOI, Taekkyun, Suwon-si, Gyeonggi-do 16677 (KR); KIM, Jihoon, Suwon-si, Gyeonggi-do 16677 (KR); KIM, Taehyeong, Suwon-si, Gyeonggi-do 16677 (KR); KIM, Hyoung Kyu, Ansan-si, Gyeonggi-do 15596 (KR); LEE, Seung Jin, Gunpo-si, Gyeonggi-do 15866 (KR)
(74) Representative: Appleyard Lees IP LLP
(86) International application number: PCT/KR2024/016501
(87) International publication number: WO 2025/100815

(57) **Abstract**

An electronic device (301) includes a conductive gasket (300A) disposed between a first portion and a second portion of the electronic device. The conductive gasket includes an electrical connecting member (370A) extending between the first portion of the electronic device and the second portion of the electronic device and forming an electrical path therebetween, and an elastic member (480) disposed between the second portion of the electronic device and a first connecting portion (471) of the electrical connecting member and including an elastic material.

## Description

### BACKGROUND

### Field

The disclosure relates to an electronic device including a conductive gasket.

### Description of Related Art

Wireless communication technologies allow transmitting and receiving various types of information. With the advancement of wireless communication technologies, electronic devices such as smartphones capable of wireless communication may provide services using communication functions such as global positioning system (GPS), wireless fidelity (Wi-Fi), long-term evolution (LTE), or near field communication (NFC). To perform such wireless communication, electronic devices may include an antenna structure. For example, various conductive portions arranged in the electronic devices may be used as transmitters for emitting and receiving signals as electromagnetic waves.

Problems arise in the effective contact between conductive portions of an electronic device. For example, discontinuous contact between conductive portions can cause the occurrence of passive intermodulation (PIM). Such a discontinuity can be due to, for example, a contact surface roughness from laser hatching, oxidation of a contact surface and/or foreign substances between the contact surfaces. Such a discontinuity can create a non-linear resistance component, thus causing the occurrence of PIM.

PIM can occur in various passive components, and is particularly problematic for antenna structures, in which interfering signals can cause various problems with the antenna structure, including antenna desensitization.

The above description is related art for the purpose of helping understand the present disclosure, and is not necessarily art publicly known before the present application was filed.

### SUMMARY

There is provided an electronic device comprising: a housing including a first surface, a second surface opposite to the first surface, and a front frame comprising a conductive portion; a display disposed to be visually exposed to the first surface and comprising a conductive layer forming a rear surface of the display; and a conductive gasket disposed between a first portion and a second portion of the electronic device, wherein the conductive gasket comprises: an electrical connecting member extending along a longitudinal direction and forming an electrical path between the first portion and the second portion of the electronic device; and an elastic member disposed between the second portion of the electronic device and the electrical connecting member and comprising an elastic material, wherein the electrical connecting member comprises: a first connecting portion coming into contact with the first portion of the electronic device; a second connecting portion fixed to the second portion of the electronic device; and a bending portion extending from the first connecting portion to the second connecting portion along the longitudinal direction and at least partially bent in a thickness direction of the electrical connecting member, and wherein the elastic member presses the first connecting portion toward the first portion of the electronic device.

According to an embodiment, the first connecting portion makes point contact with the first portion of the electronic device.

According to an embodiment, the first connecting portion comprises a contact protrusion protruding toward the first portion of the electronic device and coming into contact with the first portion.

According to an embodiment, the bending portion is configured to have higher flexibility than the first connecting portion and/or the second connecting portion.

According to an embodiment, the bending portion comprises a first through hole penetrating in the thickness direction of the electrical connecting member.

According to an embodiment, the first through hole is formed in an elliptical shape having a maj or axis in a width direction orthogonal to the longitudinal direction of the electrical connecting member.

According to an embodiment, the electronic device further comprises a plurality of first through holes formed on the bending portion, and the plurality of first through holes are disposed to be spaced apart in the longitudinal direction of the electrical connecting member.

According to an embodiment, the bending portion comprises a plurality of second through holes penetrating in a thickness direction of the electrical connecting member and having a substantially circular shape.

According to an embodiment, in a state in which a surface of the electrical connecting member is viewed, the bending portion is formed such that both ends in the width direction are recessed inward.

According to an embodiment, the electrical connecting member comprises: a base layer formed of a first material based on a cross section; and a surface layer covering an outer surface of the base layer and formed of a second conductive material.

According to an embodiment, the first portion of the electronic device is the conductive layer of the display, and the second portion of the electronic device is the front frame.

According to an embodiment, the electronic device further comprises: a (1-1)-th adhesive layer disposed between the elastic member and the second portion; and a (1-2)-th adhesive layer disposed between the elastic member and the first connecting portion of the electrical connecting member.

According to an embodiment, the second connecting member comprises: a first adhesive area of which at least a portion is integrally connected with the first portion of the electronic device; and a second adhesive area positioned between the first adhesive area and the bending portion.

According to an embodiment, the electronic device further comprises: a second adhesive layer disposed between the second adhesive area of the second connecting portion and the second portion of the electronic device.

According to an embodiment, the elastic member comprises polyurethane foam.

There is also provided a conductive gasket comprising: an electrical connecting member formed to extend along a longitudinal direction and comprising a conductive material; and an elastic member connected to the electrical connecting member and comprising an elastic material, wherein the electrical connecting member comprises: a first connecting portion with a surface to which the elastic member is connected; a bending portion extending from the first connecting portion to an outer side of the elastic member along the longitudinal direction, and at least partially bent; and a second connecting portion extending from the bending portion in a direction opposite to the first connecting portion along the longitudinal direction.

According to an embodiment, the conductive gasket is disposed inside an electronic device and forms an electrical path between a first portion and a second portion of the electronic device spaced apart from each other, and the electrical connecting member is configured such that the first connecting portion comes into contact with the first portion and the second connecting portion is fixed to the second portion.

According to an embodiment, the first connecting portion comprises a contact protrusion protruding in a direction opposite to the elastic member.

According to an embodiment, the bending portion is configured to have higher flexibility than the first connecting portion and/or the second connecting portion.

According to an embodiment, the bending portion comprises a first through hole penetrating in a thickness direction of the electrical connecting member.

According to an aspect, there is provided an electronic device comprising: a conductive gasket disposed between a first portion of the electronic device and a second portion of the electronic device, wherein the first portion of the electronic device and the second portion of the electronic device are electrically conductive, and wherein the conductive gasket comprises: an electrical connecting member extending between the first portion of the electronic device and the second portion of the electronic device and forming an electrical path therebetween; and an elastic member comprising an elastic material, wherein the electrical connecting member comprises: a first connecting portion that contacts the first portion of the electronic device; a second connecting portion that contacts the second portion of the electronic device; and a bending portion extending from the first connecting portion to the second connecting portion and at least partially bent in a thickness direction of the electrical connecting member, and wherein the elastic member is disposed between the second portion of the electronic device and the first connecting portion and exerts a force on the first connecting portion in a direction toward the first portion of the electronic device.

According to an embodiment, the first connecting portion makes a point contact with the first portion of the electronic device.

According to an embodiment, the first connecting portion comprises a contact protrusion protruding toward the first portion of the electronic device and contacting the first portion.

According to an embodiment, the bending portion is configured to have a lower stiffness than that of the first connecting portion or the second connecting portion.

According to an embodiment, the bending portion comprises a first through hole penetrating in the thickness direction of the electrical connecting member.

According to an embodiment, the first through hole is formed in an elliptical shape having a major axis in a width direction orthogonal to both an extension direction of the electrical connecting member and the thickness direction of the electrical connecting member.

According to an embodiment, the electronic device further comprises a plurality of first through holes are formed on the bending portion, and the plurality of first through holes are disposed to be spaced apart in an extension direction of the electrical connecting member.

According to an embodiment, the bending portion comprises a plurality of second through holes penetrating in the thickness direction of the electrical connecting member and having a substantially circular shape.

According to an embodiment, the bending portion is narrower than the first connecting portion and the second connecting portion.

According to an embodiment, the electrical connecting member comprises: a base layer formed of a first material; and a surface layer covering an outer surface of the base layer and formed of a second conductive material.

According to an embodiment, the first portion of the electronic device is a conductive layer of a display of the electronic device, and the second portion of the electronic device is a front frame of the electronic device, wherein the front frame comprises a conductive portion.

According to an embodiment, the electronic device further comprises a (1-1)-th adhesive layer disposed between the elastic member and the second portion; and a (1-2)-th adhesive layer disposed between the elastic member and the first connecting portion of the electrical connecting member.

According to an embodiment, the second connecting member comprises: a first adhesive area of which at least a portion is integrally connected with the first portion of the electronic device; and a second adhesive area positioned between the first adhesive area and the bending portion.

According to an embodiment, the electronic device further comprises a second adhesive layer disposed between the second adhesive area of the second connecting portion and the second portion of the electronic device.

According to an embodiment, there is provided a conductive gasket as described above.

According to an embodiment, an electronic device includes a housing including a first surface, a second surface opposite to the first surface, and a front frame including a conductive portion, a display disposed to be visually exposed to the first surface and including a conductive layer forming a rear surface of the display, and a conductive gasket disposed between a first portion and a second portion of the electronic device. The conductive gasket may include an electrical connecting member extending along a longitudinal direction and forming an electrical path between the first portion and the second portion of the electronic device, and an elastic member disposed between the second portion of the electronic device and the electrical connecting member and including an elastic material. The electrical connecting member may include a first connecting portion coming into contact with the first portion of the electronic device, a second connecting portion fixed to the second portion of the electronic device, and a bending portion extending from the first connecting portion to the second connecting portion along the longitudinal direction and at least partially bent in a thickness direction of the electrical connecting member. The elastic member may press the first connecting portion toward the first portion of the electronic device.

According to an embodiment, an electronic device includes a housing including a first surface, a second surface opposite to the first surface, and a front frame including a conductive portion, a display disposed to be visually exposed to the first surface and including a conductive layer forming a rear surface, and a conductive gasket disposed between the display and the second surface of the hosing. The conductive gasket may include an electrical connecting member having a longitudinal direction and forming an electrical path between the conductive layer and the front frame, and an elastic member pressing at least a portion of the electrical connecting member by the conductive layer. The electrical connecting member may include a first connecting portion which is wound around an outer surface of the elastic member and of which at least a portion comes into contact with the conductive layer, and a second connecting portion extending from the first connecting portion along the longitudinal direction, and fixed to the front frame. At least a portion of a surface of the first connecting portion facing the display may come into contact with the conductive layer by the elastic member.

According to an embodiment, an electronic device includes a housing including a first surface, a second surface opposite to the first surface, and a front frame including a conductive portion, a display disposed to be visually exposed to the first surface and including a conductive layer forming a rear surface, and a conductive gasket disposed between the display and the front frame. The conductive gasket may include an electrical connecting member formed as a plate having a longitudinal direction, and forming an electrical path between the conductive layer and the front frame, and an elastic member disposed between the front frame and the electrical connecting member and including an elastic material. The electrical connecting member may include a first connecting portion including a contact protrusion protruding toward the display and coming into contact with the conductive layer, a second connecting portion of which at least a portion is integrally connected to the front frame, and a bending portion connecting the first connecting portion and the second connecting portion and is at least partially bent. When the display is viewed, the first connecting portion and the second connecting portion of the electrical connecting member may not overlap.

According to an embodiment, an electronic device includes a housing including a first surface, a second surface opposite to the first surface, and a front frame including a conductive portion, a display disposed on the housing to be visually exposed through the first surface and including a conductive layer forming a rear surface, and a conductive gasket disposed inside the electronic device. The conductive gasket may include an electrical connecting member having a longitudinal direction and forming an electrical path between the front frame and the conductive layer, and an elastic member including an elastic material and pressing at least a portion of the electrical connecting member by the conductive layer. The electrical connecting member may include a first connecting portion disposed between the elastic member and the conductive layer and coming into contact with the conductive layer, a second connecting portion including a (2-1)-th connecting portion disposed between the elastic member and the front frame, and a (2-2)-th connecting portion extending from the (2-1)-th connecting portion to the outside of the elastic member along the longitudinal direction and having at least a portion fixed to the front frame, and a bending portion connecting the first connecting portion and the (2-1)-th connecting portion and at least partially bent.

According to an embodiment, a conductive gasket includes an electrical connecting member formed to extend along a longitudinal direction and including a conductive material, and an elastic member connected to the electrical connecting member and including an elastic material. The electrical connecting member may include a first connecting portion having a surface to which the elastic member is connected, a bending portion extending from the first connecting portion to the outside of the elastic member along the longitudinal direction and at least partially bent, and a second connecting portion extending from the bending portion along the longitudinal direction in a direction opposite to the first connecting portion.

According to the present invention there is provided an electronic device and a conductive gasket as set forth in the appended claims. Other features of the invention will be apparent from the dependent claims, and the description which follows. The effects of an electronic device according to embodiments are not limited to the above-mentioned effects, and other unmentioned effects may be clearly understood from the following description by one of ordinary skill in the art.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram of an electronic device, according to an embodiment, in a network environment;
FIG. 2A is a front perspective view of an electronic device according to an embodiment;
FIG. 2B is a rear perspective view of the electronic device of FIG. 2A;
FIG. 2C is an exploded perspective view of the electronic device of FIG. 2A;
FIG. 3 is a partial plan view of an electronic device illustrating a conductive gasket according to an embodiment;
FIG. 4A is a partial cross-sectional view of the electronic device of FIG. 3 taken along line A-A of FIG. 3 to show the conductive gasket;
FIG. 4B is a partial cross-sectional view of the electronic device of FIG. 3 taken along line A-A of FIG. 3 to show the conductive gasket;
FIG. 5A is a perspective view of a conductive gasket according to an embodiment;
FIG. 5B is a diagram illustrating a state in which the conductive gasket of FIG. 5A is viewed from a first surface of an electrical connecting member;
FIG. 5C is a side view of the conductive gasket of FIG. 5A;
FIG. 5D is a diagram illustrating a state in which the conductive gasket of FIG. 5A is viewed from a second surface of an electrical connecting member;
FIG. 5E is a cross-sectional view of the electrical connecting member of FIG. 5A;
FIG. 6A is a perspective view of a conductive gasket according to an embodiment;
FIG. 6B is a perspective view of a conductive gasket according to an embodiment;
FIG. 7A is a perspective view of a conductive gasket according to an embodiment;
FIG. 7B is a side view of the conductive gasket of FIG. 7A;
FIG. 8A is a partial cross-sectional view of an electronic device illustrating a conductive gasket according to an embodiment;
FIG. 8B is a perspective view of the conductive gasket of FIG. 8A;
FIG. 9A is a partial cross-sectional view of an electronic device illustrating a conductive gasket according to an embodiment;
FIG. 9B is a perspective view of the conductive gasket of FIG. 9A;
FIG. 9C is a diagram illustrating a state in which the conductive gasket of FIG. 9A is viewed from a first surface of an electrical connecting member; and
FIG. 9D is a perspective view of the conductive gasket of FIG. 9A illustrating a bending portion.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted.

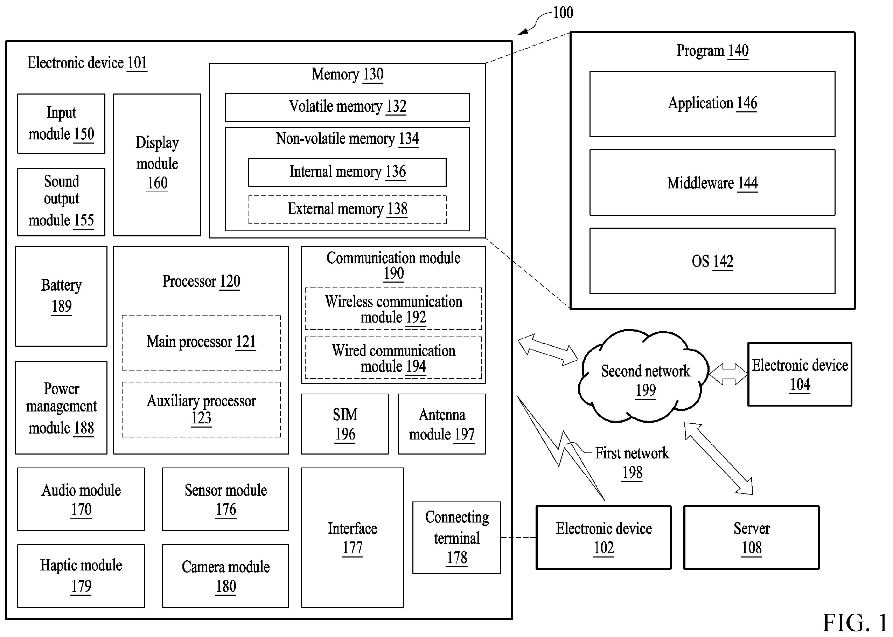

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a nonvolatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, or the projector. According to an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multi components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a portion of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. **In** another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," may include any one of the items listed together in the corresponding one of the phrases, or all possible combinations thereof. Terms such as "1^{st}", "2^{nd}", or "first" or "second" may simply be used to distinguish the component from other components in question, and do not limit the components in other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments disclosed herein may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

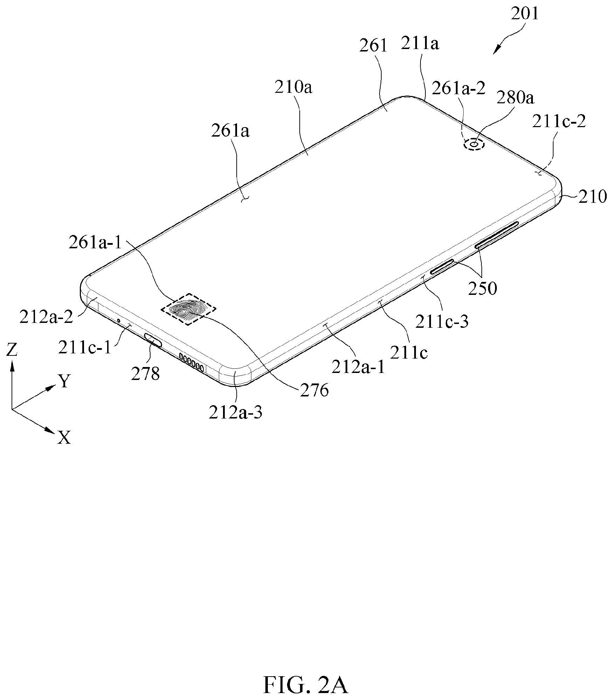

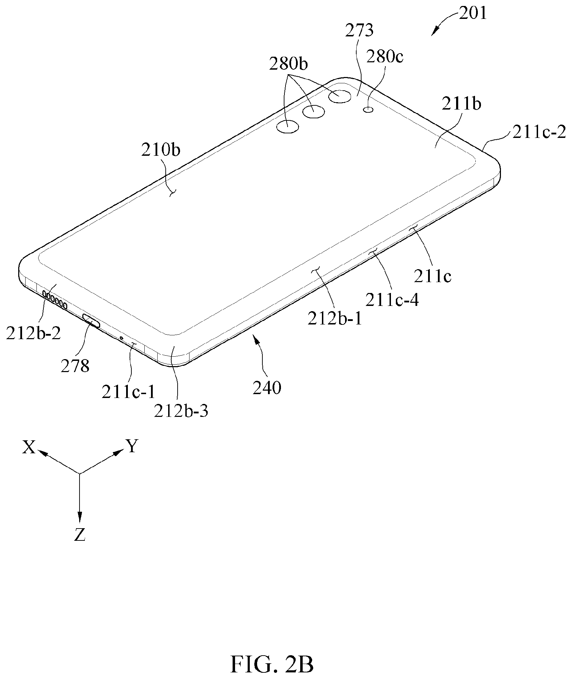

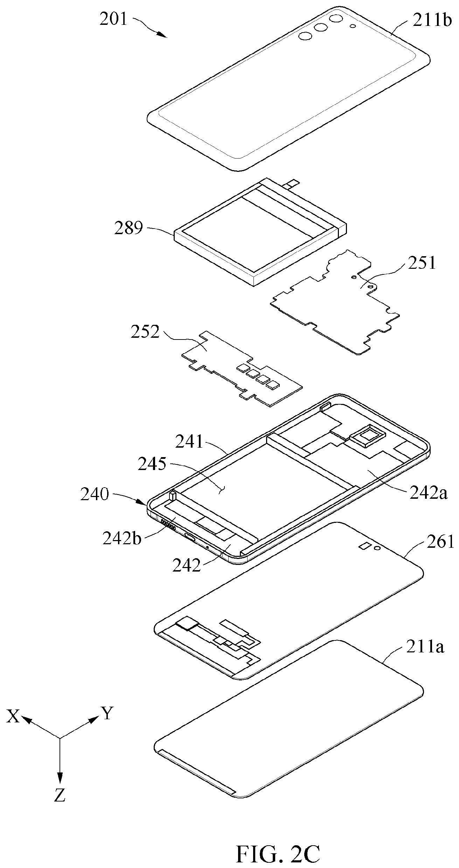

FIG. 2A is a front perspective view of an electronic device according to an embodiment. FIG. 2B is a rear perspective view of an electronic device according to an embodiment. FIG. 2C is an exploded perspective view of an electronic device according to an embodiment.

Referring to FIGS. 2A, 2B, and 2C, an electronic device (e.g., the electronic device 101 of FIG. 1) may include a housing forming a first surface (or front surface), a second surface (or rear surface), and a side surface surrounding a space between the first surface and the second surface. It should be noted that a shape of the housing shown in the drawings is an example.

An electronic device 201 according to an embodiment may include a housing 210 that forms an exterior and accommodates components therein. The housing 210 may form a front surface 210a (e.g., a surface facing a +Z-axis direction), a rear surface 210b (e.g., a surface facing a -Z-axis direction), and a side surface 211c surrounding an inner space between the front surface 210a and the rear surface 210b. In an embodiment, the housing 210 may form the side surface 211c through a first side surface 211c-1 (e.g., a surface facing a -Y-axis direction), a second side surface 211c-2 (e.g., a surface facing a +Y-axis direction), a third side surface 211c-3 (e.g., a surface facing a +X-axis direction), and a fourth side surface 211c-4 (e.g., a surface facing a -X-axis direction) connecting the front surface 210a and the rear surface 210b.

In an embodiment, the front surface 210a may be formed by a front plate 211a of which at least a portion is substantially transparent. For example, the front plate 211a may include a polymer plate or a glass plate including at least one coating layer. In an embodiment, the rear surface 210b may be formed by a rear plate 211b that is substantially opaque. For example, the rear plate 211b may be formed of coated or tinted glass, ceramic, polymer, metal (e.g., aluminum, stainless steel, magnesium, or a combination thereof), or a combination thereof. In an embodiment, the side surface 211c may be coupled to the front plate 211a and the rear plate 211b and may be formed by a front frame 240 including metal and/or polymer. In an embodiment, the rear plate 211b and the front frame 240 may be integrally and seamlessly formed. In an embodiment, the rear plate 211b and the front frame 240 may be formed of substantially the same material (e.g., aluminum).

In an embodiment, the front plate 211a may include a plurality of first periphery areas 212a-1 facing one direction (e.g., the +/-X-axis direction), extending from at least a partial area of the front surface 210a to the rear plate 211b, and having a rounded surface, a plurality of second periphery areas 212a-2 facing another direction (e.g., the +/-Y-axis direction), extending from at least a partial area of the front surface 210a to the rear plate 211b, and having a rounded surface, and a plurality of third periphery areas 212a-3 extending from at least a partial area of the front surface 210a to the rear plate 211b with a rounded surface, and positioned between the plurality of first periphery areas 212a-1 and the plurality of second periphery areas 212a-2.

In an embodiment, the rear plate 211b may include a plurality of fourth periphery areas 212b-1 facing one direction (e.g., the +/-X-axis direction), extending from at least a partial area of the rear surface 210b to the front plate 211a, and having a rounded surface, a plurality of fifth periphery areas 212b-2 facing another direction (e.g., the +/-Y-axis direction), extending from at least a partial area of the rear surface 210b to the front plate 211a, and having a rounded surface, and a plurality of sixth periphery areas 212b-3 extending from at least a partial area of the rear surface 210b to the front plate 211a with a rounded surface, and positioned between the plurality of fourth periphery areas 212b-1 and the plurality of fifth periphery areas 212b-2.

In an embodiment, the front frame 240 may surround at least a portion of the inner space between the front surface 210a and the rear surface 210b. In an embodiment, a display 261 may be positioned on one surface (e.g., the +Z-axis direction) of the front frame 240, and the rear plate 211b may be disposed on the other surface (e.g., the -Z-axis direction) of the front frame 240. In an embodiment, the front frame 240 may include a conductive portion. For example, at least a portion of the front frame 240 may be formed of a conductive material. In an embodiment, the frame 240 may include a first support structure 241 disposed on at least a portion of the side surface 211c and a second support structure 242 connected to the first support structure 241 to form a space for disposing the components of the electronic device 201.

In an embodiment, the first support structure 241 may connect the periphery of the front plate 211a and the periphery of the rear plate 211b and surround the space between the front plate 211a and the rear plate 211b, thereby forming the side surface 211c of the housing 210. In an embodiment, the second support structure 242 may be disposed inside (or in a body portion) of the electronic device 201. The first support structure 241 and the second support structure 242 may be integrally formed or may be formed separately and connected to each other. In an embodiment, the first support structure 241 and the second support structure 242 may include a conductive portion. For example, the first support structure 241 may be formed of a metal and/or conductive polymer material. In an embodiment, like the first support structure 241, the second support structure 242 may be formed of a metal and/or a conductive polymer material.

In an embodiment, the electronic device 201 may include the display 261 (e.g., the display module 160 of FIG. 1). In an embodiment, the display 261 may be positioned on the front surface 210a of the electronic device 201. In an embodiment, the display 261 may be exposed through at least a portion (e.g., the first periphery areas 212a-1, the second periphery areas 212a-2, and the third periphery areas 212a-3) of the front plate 211a. In an embodiment, the display 261 may have a shape that is substantially the same as the shape of an outer contour of the front plate 211a. Although not shown in the drawing, the display 261 according to an embodiment may include a touch screen panel (TSP), a pressure sensor, and/or a digitizer (not shown) for detecting a stylus pen.

In an embodiment, the display 261 may include a screen display area 261a that is visually exposed to outside of the electronic device 201 to display content through a pixel or a plurality of cells. In an embodiment, the screen display area 261a may include a sensing area 261a-1 and/or a camera area 261a-2. The sensing area 261a-1 may overlap at least a portion of the screen display area 261a. The sensing area 261a-1 may allow transmission of an input signal related to a sensor module (e.g., the sensor module 176 of FIG. 1). The sensing area 261a-1 may display content together with the screen display area 261a that does not overlap the sensing area 261a-1.

In an embodiment, the camera area 261a-2 may overlap at least a partial area of the screen display area 261a. The camera area 261a-2 may expose a lens of a first camera module 280a (e.g., the camera module 180 of FIG. 1) disposed to face the front surface of the electronic device 201. For example, the camera area 261a-2 may allow transmission of an optical signal (e.g., light) related to the camera module 280a. In an embodiment, the camera area 261a-2 may display content, like the screen display area 261a that does not overlap the camera area 261a-2. For example, the camera area 261a-2 may display the content while the first camera module 280a is not operating.

In an embodiment, the electronic device 201 may include a sensor module 276. The sensor module 276 may sense a signal applied to the electronic device 201. The sensor module 276 may be positioned, for example, on the front surface 210a of the electronic device 201. The sensor module 276 may be disposed on the electronic device 201 to correspond to the sensing area 261a-1 of the screen display area 261a. For example, the sensor module 276 may also be disposed to perform its function in the inner space of the electronic device 201 without being visually exposed through the display 261. The sensor module 276 may receive an input signal transmitted through the sensing area 261a-1 and generate an electrical signal based on the received input signal. For example, the input signal may have a designated physical quantity (e.g., heat, light, temperature, sound, pressure, or ultrasound). In another example, the input signal may include a signal related to biometric information of a user (e.g., a fingerprint, a voice, or the like of a user).

In an embodiment, the electronic device 201 may include camera modules 280a and 280b (e.g., the camera module 180 of FIG. 1). In an embodiment, the camera modules 280a and 280b may include a first camera module 280a and a second camera module 280b. In an embodiment, the electronic device 201 may include a flash 280c disposed near the first camera module 280a and the second camera module 280b.

In an embodiment, the first camera module 280a may be disposed on the front surface 210a of the housing 210 to expose a lens, and may receive an optical signal from the front side (e.g., the +Z-axis direction) of the electronic device 201. The second camera module 280b may be disposed on the rear surface 210b of the housing 210 to expose a lens, and may receive an optical signal from the rear side (e.g., the -Z-axis direction) of the electronic device 201. In an embodiment, at least a portion of the first camera module 280a may be disposed in the housing 210 so as to be covered through the display 261. For example, the first camera module 280a may include an under display camera (UDC). In an embodiment, the first camera module 280a may receive an optical signal transmitted through the camera area 261a-2. In an embodiment, the second camera module 280b may include a plurality of cameras (e.g., dual cameras, triple cameras, or quad cameras). In an embodiment, the flash 280c may include a light-emitting diode or a xenon lamp.

In an embodiment, the electronic device 201 may include an input module 250 (e.g., the input module 150 of FIG. 1). The input module 250 may receive a manipulation signal from a user. The input module 250 may include, for example, at least one key input device disposed to be exposed on the side surface 211c of the housing 210.

In an embodiment, the electronic device 201 may include a connecting terminal 278 (e.g., the connecting terminal 178 of FIG. 1). In an embodiment, the connecting terminal 278 may be disposed on an outer circumferential surface of the housing 210. The electronic device 201 may be connected by wire to an external device (e.g., another electronic device or an external power supply) through the connecting terminal 278.

In an embodiment, the electronic device 201 may include one or more circuit boards (PCBs). For example, the electronic device 201 may include a first circuit board 251 (or a main circuit board) and a second circuit board 252 (or a sub-circuit board). The first circuit board 251 and the second circuit board 252 may be disposed inside the electronic device 201, for example, on the second support structure 242. At least one circuit board 251 or 252 may be connected to the second support structure 242 through a ground. In an embodiment, the first circuit board 251 may be accommodated in a first substrate slot 242a of the second support structure 242. In an embodiment, the second circuit board 252 may be accommodated in a second substrate slot 242b of the second support structure 242. In an embodiment, the circuit board 251 or 252 may be a rigid PCB or a flexible PCB (FPCB) that is at least partially bendable.

In an embodiment, the electronic device 201 may include a battery 289 disposed therein. The battery may be disposed in a battery slot formed in the second support structure 242.

The electronic device according to the embodiments disclosed herein may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

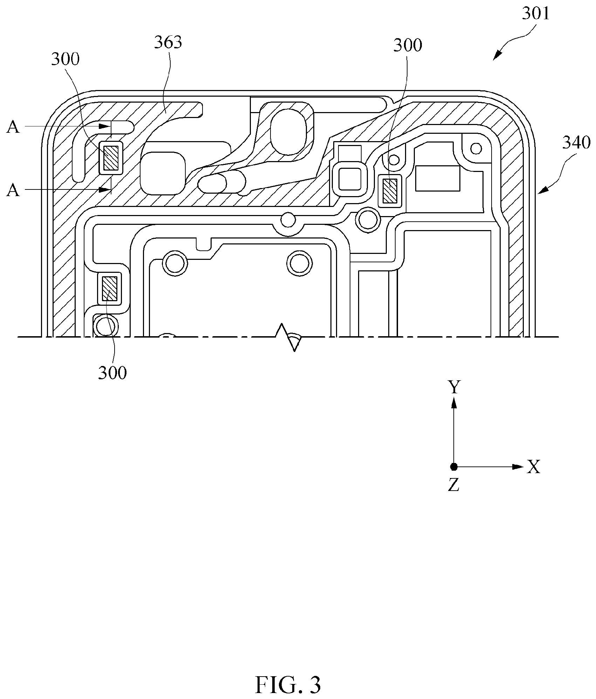

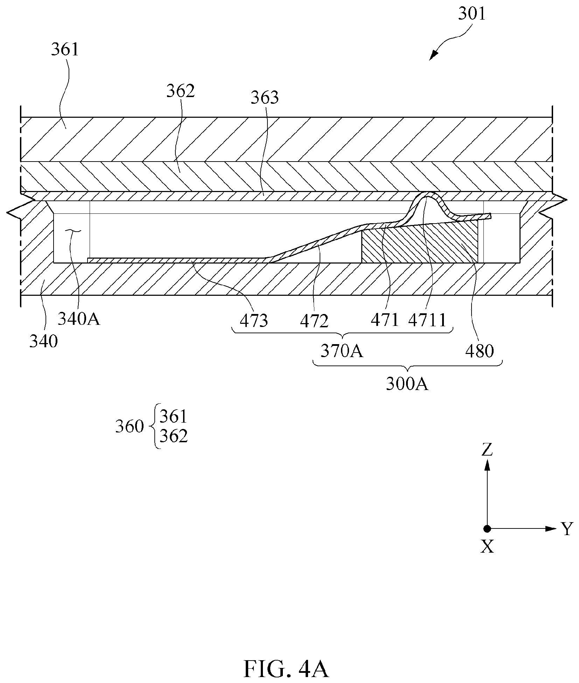

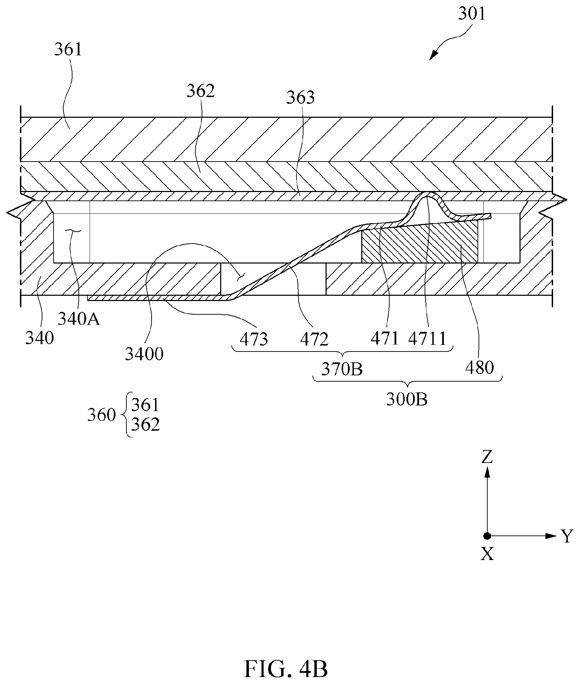

FIG. 3 is a partial plan view of an electronic device illustrating a conductive gasket according to an embodiment. FIG. 4A is a partial cross-sectional view of an electronic device taken along line A-A of FIG. 3 to show a conductive gasket according to an embodiment. FIG. 4B is a partial cross-sectional view of an electronic device taken along line A-A of FIG. 3 to show a conductive gasket according to an embodiment.

For reference, a conductive gasket 300A shown in FIG. 4A and a conductive gasket 300B shown in FIG. 4B each correspond to an example of a conductive gasket 300 shown in FIG. 3. Hereinafter, it is understood that the conductive gasket 300 includes the conductive gasket 300A shown in FIG. 4A and the conductive gasket 300B shown in FIG. 4B, and it should be noted that the description of the conductive gasket 300 may apply to the conductive gasket 300A shown in FIG. 4A and the conductive gasket 300B shown in FIG. 4B in the same manner, unless otherwise noted.

Referring to FIGS. 3, 4A, and 4B, an electronic device 301 (e.g., the electronic device 201 of FIG. 2A) according to an embodiment may include a housing (e.g., the housing 210 of FIG. 2A), a display 360 (e.g., the display 261 of FIG. 2A), and the conductive gasket 300.

In an embodiment, the housing may include a first surface, a second surface opposite to the first surface, and a side surface surrounding an inner space between the first surface and the second surface. In an embodiment, the housing may include a front frame 340 that forms at least a portion of the side surface and supports components disposed in the inner space of the electronic device 301. In an embodiment, the front frame 340 may include a plurality of conductive portions formed of a conductive material. In an embodiment, the front frame 340 may function as a transmitter having an electrically conductive portion through which an electrical signal, i.e., an electrical current, flows. For example, the front frame 340 may be electrically connected to a wireless communication circuit (e.g., the communication module 190 of FIG. 1) and may receive an electrical signal from the wireless communication circuit. The electrical signal applied to the front frame 340 may move along an electrical path formed by the conductive portion of the front frame 340, and form an antenna having a radiation pattern corresponding to a specific frequency band in the conductive portion.

In an embodiment, the display 360 may be disposed on the first surface (e.g., the +Z-axis direction of FIG. 3) of the electronic device 301. In an embodiment, the display 360 may be supported by the front frame 340. For example, the display 360 may be supported on one surface of the front frame 340 facing the first surface (e.g., the +Z-axis direction of FIG. 3) of the electronic device 301. In an embodiment, at least a portion of the display 360 may be attached to one surface of the front frame 340. In an embodiment, the display 360 may include a display member 361 for displaying a screen, and a conductive layer 362 connected to the display member 361 and forming a rear surface.

In an embodiment, the conductive layer 362 may form a rear surface of the display 360, for example, a rear surface of the display 360 facing the front frame 340. In an embodiment, the conductive layer 362 may be disposed on at least a portion of the rear surface of the display member 361. In an embodiment, the conductive layer 362 may include an electrically conductive material, for example, a metal material such as copper (Cu). In an embodiment, the conductive layer 362 may form a conductive area for an electrical signal to flow along the rear surface of the display 360. In an embodiment, the conductive layer 362 may form a plurality of electrically separated conductive areas on the rear surface of the display 360. Each conductive area may function as an antenna area for transmitting and/or receiving an electromagnetic signal on the rear surface of the display 360. In an embodiment, the conductive layer 362 may be positioned between the display member 361 and a connecting layer 363.

In an embodiment, the connecting layer 363 may be disposed between a connecting portion of the display 360 and the front frame 340, and one surface is connected to the display 360 and one surface is connected to the front frame 340. In an embodiment, the connecting layer 363 may include an adhesive. For example, the connecting layer 363 may be a double-sided tape including an adhesive.

In an embodiment, the conductive gasket 300 may be disposed inside the electronic device 301. The conductive gasket 300 may be disposed between two conductive portions of the electronic device 301 that are spaced apart from each other. For example, the conductive gasket 300 may be disposed between a first portion (e.g., the display 360) and a second portion (e.g., the front frame 340 or a rear frame (not shown)) of the electronic device 301. Herein, the first portion of the electronic device is an electrically conductive portion of the electronic device that is configured to be electrically connected to the electrically conductive second portion of the electronic device. In an embodiment, the conductive gasket 300 may connect the first portion and the second portion of the electronic device 301. For example, the conductive gasket 300 may connect the conductive layer 362 and the front frame 340 of the display 360, like the conductive gasket 300A shown in FIG. 4A. Hereinafter, for convenience of description, the conductive gasket 300 (e.g., the conductive gasket 300A of FIG. 4A and the conductive gasket 300B of FIG. 4B) will be described assuming that the first portion of the electronic device 301 is the conductive layer 362 of the display 360, and the second portion of the electronic device 301 is the front frame 340, as shown in FIG. 4A. However, the first portion and the second portion of the electronic device 301 connected by the conductive gasket 300 are not limited thereto, and it should be noted that the conductive gasket 300 may connect various conductive portions inside the electronic device 301 to form a conductive path. For example, the conductive gasket 300 may be used to connect the conductive layer 362 of the display 360 and a rear frame (not shown), or the conductive layer 362 of the display 360 and a PCB (e.g., the PCBs 251 and 252 of FIG. 2C).

Referring to FIG. 4A, in an embodiment, the conductive gasket 300A may include an electrical connecting member 370A that includes an electrically conductive material and extends between a first portion of the electronic device and a second portion of the electronic device, for example, along a longitudinal direction L (e.g., the Y-axis direction of FIG. 4A), and an elastic member 480 connected to the electrical connecting member 370A.

In an embodiment, the electrical connecting member 370A may be disposed between the first portion and the second portion of the electronic device 301 to form an electrical path between the first portion and the second portion. For example, the electrical connecting member 370A may form an electrical path between the conductive layer 362 and the front frame 340. In an embodiment, the electrical connecting member 370A may be disposed in an area where the front frame 340 overlaps the conductive layer 362 in a state in which the display 360 is viewed (e.g., a state viewed in the +Z-axis direction of FIG. 4A). In an embodiment, the electrical connecting member 370A may form a direct electrical path between the front frame 340 and the conductive layer 362, thereby allowing an electrical signal applied to the front frame 340 to flow to the conductive layer 362 and vice versa. In an embodiment, a plurality of the electrical connecting members 370A may be provided and may be respectively disposed at a plurality of points on the front frame 340 to directly to electrically connect the corresponding front frame 340 and conductive layer 362 at the disposed position(s).

In an embodiment, the electrical connecting member 370A may be disposed between the display 360 and the second surface (e.g., a surface facing the -Z-axis direction) of the housing, for example, between the display 360 and the front frame 340. For example, as shown in FIG. 4A, the front frame 340 may include a recess 340A at a position where the electrical connecting member 370A is disposed. The recess 340A may form a space in which the electrical connecting member 370A may be disposed between the front frame 340 and the display 360. In an embodiment, the connecting layer 363 may be omitted such that the conductive layer 362 is exposed.

In an embodiment, the electrical connecting member 370A may include a first connecting portion 471 directly and/or electrically connected to the first portion (e.g., the conductive layer 362) of the electronic device 301, a second connecting portion 473 directly and/or electrically connected to the second portion (e.g., the front frame 340) of the electronic device 301, and a bending portion 472 connecting the first connecting portion 471 and the second connecting portion 473.

In an embodiment, the first connecting portion 471 may come into contact with the first portion of the electronic device 301, for example, the conductive layer 362. For example, an elastic member 480 may exert a force on the first connecting portion 471, which will be described below, such that a portion of the surface (e.g., a surface facing the +Z-axis direction of FIG. 4A) comes into contact with the conductive layer 362. In an embodiment, the first connecting portion 471 may make point contact with the conductive layer 362. For example, the first connecting portion 471 may include a contact protrusion 4711 protruding from the surface toward the display 360. The contact protrusion 4711 may have a curved surface shape, such as a hemispherical shape so as to substantially make point contact on the conductive layer 362. Meanwhile, the shape of the contact protrusion 4711 is not limited thereto. For example, a protruding end portion of the contact protrusion 4711 may be formed to be substantially flat to cushion the impact/force applied when the contact protrusion 4711 comes into contact with the display 360, i.e., to reduce the pressure exerted on the display 360 by the contact protrusion 4711.

In an embodiment, when the first connecting portion 471 makes point contact with the conductive layer 362, a non-linear resistance generated due to discontinuous contact between the conductive layer 362 and the first connecting portion 471 may be reduced or minimized, thereby reducing the occurrence of passive intermodulation (PIM). That is, without the conductive gasket 300A, the discontinuous contact between the two surfaces creates a non-linear resistance component, thus causing PIM. The conductive gasket provides a continuous/stable contact structure, so the non-linear resistance components and associated PIM are reduced. Similarly, the point contact structure further reduces the discontinuity in the surface contact, thus reducing the associated non-linear resistance components and PIM.

In an embodiment, the second connecting portion 473 may be fixed to the second portion of the electronic device 301, for example, the front frame 340. For example, at least a portion of a surface (e.g., a surface facing the -Z-axis direction of FIG. 4A) of the second connecting portion 473 may be integrally connected to the front frame 340. For example, the second connecting portion 473 may be welded to the front frame 340. When the second connecting portion 473 is integrally connected to the front frame 340 by a method such as welding, a discontinuous contact structure occurring on a contact surface of the front frame 340 and the second connecting portion 473 may be reduced or minimized. That is, the welded contact provides a continuous/stable contact structure, further reducing the non-linear resistance components and associated PIM.

In an embodiment, the electrical connecting member 370A may be connected such that the second connecting portion 473 is disposed on a surface of the front frame 340 facing the display (e.g., the surface of the front frame 340 facing the +Z-axis direction).

In an embodiment, the bending portion 472 may connect the first connecting portion 471 and the second connecting portion 473. In an embodiment, the bending portion 472 may extend from the first connecting portion 471 to the second connecting portion 473 along the longitudinal direction L of the electrical connecting member 370. **In** an embodiment, the bending portion 472 may be at least partially bent in a thickness direction (e.g., the Z-axis direction) of the electrical connecting member 370. The bending portion 472 being "at least partially bent" means that the bending portion 472 includes a part that is bent. The bending portion may also include a part that is not bent. The thickness direction is the direction in which the thickness of the electrical connecting member is measurable. The bending portion 472 may be bent in the thickness direction from the front frame 340 toward the display 360 along the longitudinal direction from the second connecting portion 473 to the first connecting portion 471. The surface of the first connecting portion 471 may come into contact with the conductive layer 362 as the first connecting portion 471 bends to face the rear surface of the display 360. **In** an embodiment, the bending portion 472 may be configured to have relatively higher flexibility compared to flexibility of the first connecting portion 471 and/or the second connecting portion 473. That is, the stiffness of the bending portion 472 may be lower that the stiffness of the first connecting portion 471 and/or the second connecting portion 473. In effect, the bending portion 472 may be more easily bent than the first connecting portion 471 and/or the second connecting portion 473.

In an embodiment, the elastic member 480 may be disposed between the front frame 340 and a portion of the electrical connecting member 370A. The elastic member 480 may include an elastic material and is configured to apply a force, e.g., an elastic force due to the elastic compression of the elastic member, to the portion of the electrical connecting member 370A, in a direction from the front frame 340 towards the display 360. For example, the elastic member 480 may be compressed between the first connecting portion 471 of the electrical connecting member 370A and the front frame 340, and exert a force on the first connecting portion 471 toward the rear surface of the display 360, for example, toward the conductive layer 362, such that at least a portion of the first connecting portion 471 comes into contact with the conductive layer 362. Since the elastic member 480 exerts a force on the first connecting portion 471 toward the conductive layer 362, at least a portion of the bending portion 472 may be bent and thus the position of the first connecting portion 471 is changed. **In** an embodiment, the elastic member 480 may include an elastic material, for example, a polyurethane foam material. **In** an embodiment, since the first connecting portion 471 and the second connecting portion 473 of the electrical connecting member 370A are separated along the longitudinal direction L, the first connecting portion 471 and the second connecting portion 473 may not overlap, i.e., may correspond to different areas, as viewed from the surface of the display 360 (e.g., when viewed in the -Z-axis direction of FIG. 4A).

The conductive gasket 300 may be connected to the front frame 340 in various ways, i.e., using various connection structures. In the embodiment shown in FIG. 4B, the conductive gasket 300B includes an elastic member 480 connected to an electrical connecting member 370B, and the electrical connecting member 370B includes a conductive material and extends along the longitudinal direction L.

In an embodiment, the electrical connecting member 370B may be disposed between the first portion and the second portion of the electronic device 301 to form an electrical path between the first portion and the second portion. For example, the electrical connecting member 370B may form an electrical path between the conductive layer 362 and the front frame 340. In an embodiment, at least a portion of the electrical connecting member 370B may be disposed in the recess 340A formed by the front frame 340. In an embodiment, the connecting layer 363 may be omitted such that the conductive layer 362 is exposed.

In an embodiment, the electrical connecting member 370B may include a first connecting portion 471 directly and/or electrically connected to the first portion (e.g., the conductive layer 362) of the electronic device 301, a second connecting portion 473 directly and/or electrically connected to the second portion (e.g., the front frame 340) of the electronic device 301, and a bending portion 472 connecting the first connecting portion 471 and the second connecting portion 473.

In an embodiment, the first connecting portion 471 may contact the first portion of the electronic device 301, for example, the conductive layer 362. For example, the elastic member 480 may exert a force on the first connecting portion 471, so that the first connecting portion 471 contacts a surface (e.g., a surface facing the +Z-axis direction of FIG. 4A) of the conductive layer 362. In an embodiment, the first connecting portion 471 may make point contact with the conductive layer 362. For example, the first connecting portion 471 may include a contact protrusion 4711 protruding from the surface toward the display 360.

In an embodiment, the second connecting portion 473 may contact the second portion of the electronic device 301, for example, the front frame 340. For example, the second connecting portion 473 may be fixed to the second portion of the electronic device 301. In an embodiment, the second connecting portion 473 may be disposed on a surface of the front frame 340 opposite to the display 360 (e.g., a surface of the front frame 340 facing the -Z-axis direction). In an embodiment, the second connecting portion 473 may be integrally connected to the front frame 340. For example, the second connecting portion 473 may be integrally connected to the surface of the front frame 340 by welding.

In an embodiment, the bending portion 472 may connect the first connecting portion 471 and the second connecting portion 473. In an embodiment, the bending portion 472 may extend from the first connecting portion 471 to the second connecting portion 473 along the longitudinal direction L of the electrical connecting member 370. In an embodiment, the bending portion 472 may be at least partially bent in a thickness direction (e.g., the Z-axis direction) of the electrical connecting member 370. For example, the bending portion 472 may be bent in the thickness direction from the front frame 340 toward the display 360 from the second connecting portion 473 to the first connecting portion 471. In an embodiment, the bending portion 472 may be configured to have relatively higher flexibility compared to flexibility of the first connecting portion 471 and/or the second connecting portion 473.

In the embodiment of FIG. 4B, the bending portion 472 connects the first connecting portion 471 and the second connecting portion 473 by passing through an opening 3400 formed in the front frame 340. As shown, this allows the electrical connecting member 370B to connect the conductive layer 362 and the rear surface of the front frame 340 (e.g., the surface of the front frame 340 facing the -Z-axis direction of FIG. 4B) by passing through the opening 3400 formed in the front frame 340. When a gap, i.e., the recess 340A, formed between the display 360 and the front frame 340 is insufficient, i.e., not wide enough, for the electrical connecting member 370B, the opening 3400 formed in the front frame 340, as shown in FIG. 4B, provides sufficient space for the electrical connecting member 370B and there is space in which the electrical connecting member 370B is able to be connected to the front frame 340. In this case, connecting the second connecting portion 473 of the electrical connecting member 370B to the front frame 340 is more convenient. This is because the surface of the display 360 facing the +Z-axis direction can be placed on a surface of a workbench when connecting the electrical connecting member 370B to the front frame 340.

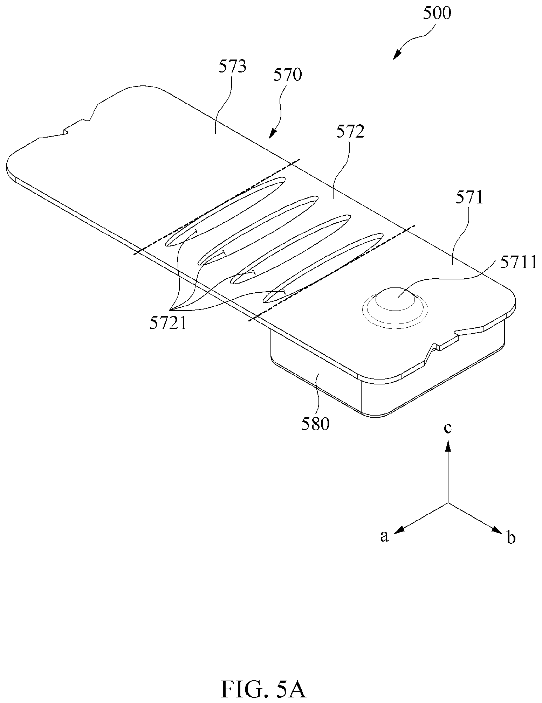

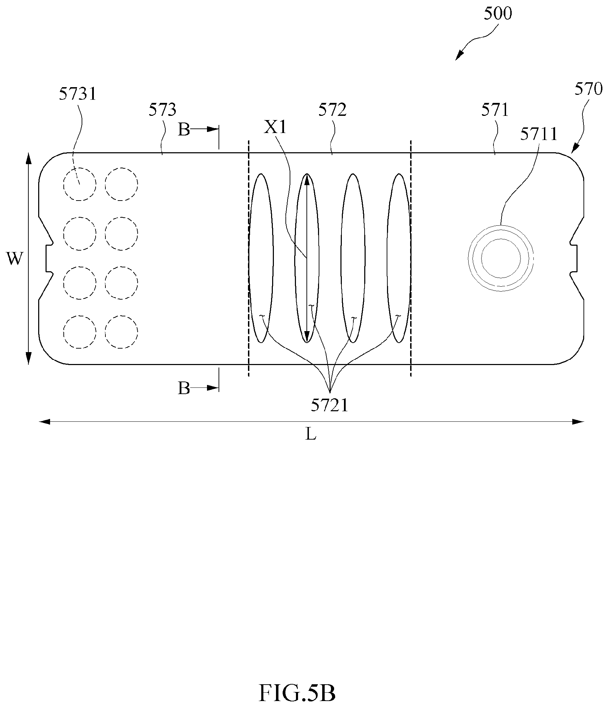

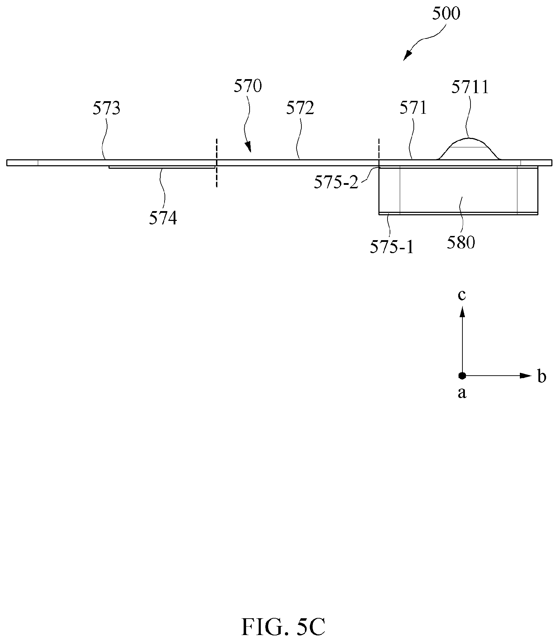

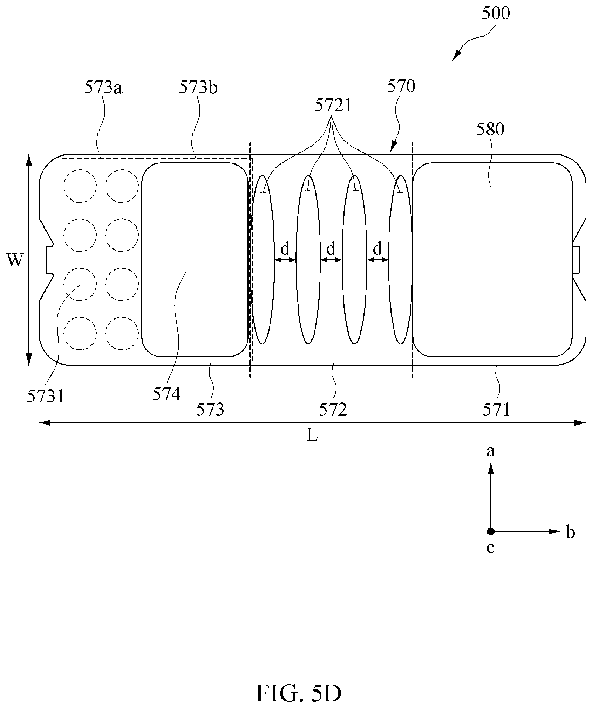

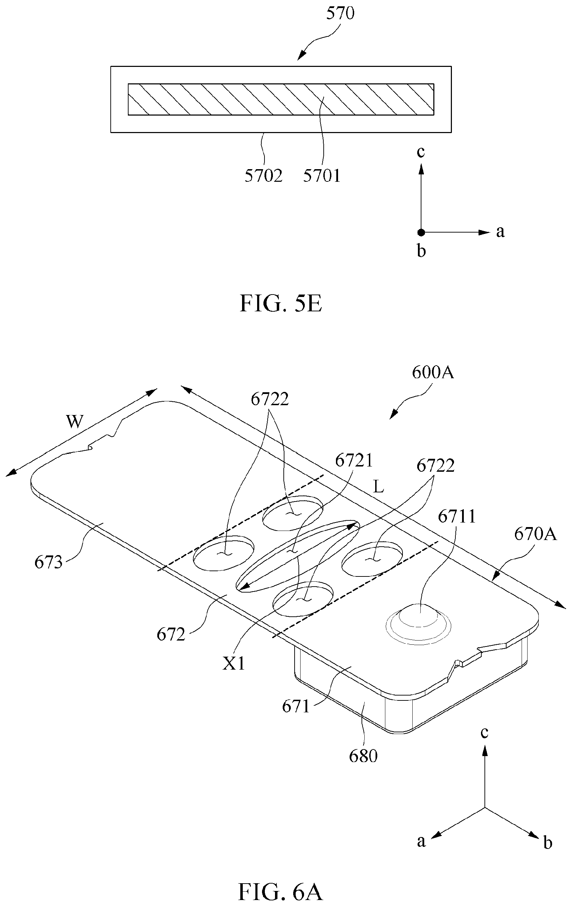

FIG. 5A is a perspective view of a conductive gasket according to an embodiment. FIG. 5B is a diagram illustrating the conductive gasket as viewed from a first surface of an electrical connecting member. FIG. 5C is a side view of the conductive gasket. FIG. 5D is a diagram illustrating the conductive gasket as viewed from a second surface of an electrical connecting member. FIG. 5E is a cross-sectional view of the electrical connecting member.

Referring to FIGS. 5A to 5E, a conductive gasket 500 according to an embodiment may include an electrical connecting member 570 and an elastic member 580.

The electrical connecting member 570 (e.g., the electrical connecting member 370A or 370B of FIGS. 4A or 4B, respectively) according to an embodiment may be formed as a plate having a length extending in a longitudinal direction L (e.g., the b-axis direction). In an embodiment, the electrical connecting member 570 may also have a width extending in a width direction W (e.g., the a-axis direction) orthogonal to the longitudinal direction L, and a thickness extending in a thickness direction (e.g., the c-axis direction) orthogonal to the longitudinal direction L and the width direction W.

As shown in the cross section of FIG. 5E, the electrical connecting member 570 may include a base layer 5701 formed of a first material and disposed inside a surface layer 5702 covering an outer surface of the base layer 5701 and formed of a second material that is an electrically conductive material. For example, the first material may include stainless steel, and the second material may include nickel.

In an embodiment, the electrical connecting member 570 may include a first connecting portion 571, a bending portion 572, and a second connecting portion 573 which are divided along the longitudinal direction L. In an embodiment, thicknesses of the first connecting portion 571, the bending portion 572, and the second connecting portion 573 may be substantially the same, however, embodiments are not limited thereto.

In an embodiment, the first connecting portion 571 may include a contact protrusion 5711 protruding from a first surface (e.g., a surface facing the +c-axis direction of FIG. 5A) of the electrical connecting member 570. In an embodiment, the contact protrusion 5711 may be formed by at least a portion of the first connecting portion 571 that protrudes from a second surface (e.g., a surface facing the -c-axis direction of FIG. 5A) toward the first surface. For example, the contact protrusion 5711 may be embossed on the first connecting portion 571. In an embodiment, a protruding surface of the contact protrusion 5711 may be formed as a curved surface so as to make point contact with a first portion (e.g., the conductive layer 462 of FIG. 4A) of an electronic device (e.g., the electronic device 301 of FIG. 4A).

In an embodiment, the elastic member 580 (e.g., the elastic member 480 of FIG. 4A) may be connected to a second surface of the first connecting portion 571 of the electrical connecting member 570. In an embodiment, the elastic member 580 may connect the front frame and the first connecting portion 571 in a state in which the electrical connecting member 570 is mounted on the front frame (e.g., the front frame 340 of FIG. 4A). In an embodiment, the elastic member 580 may exert a force on the first connecting portion 571 in a direction away from the second portion (e.g., the front frame 340 of FIG. 4A) of the electronic device (e.g., the electronic device 301 of FIG. 4A), such that the contact protrusion 5711 of the first connecting portion 571 comes into contact with the first portion, e.g., the conductive layer (e.g., the conductive layer 462 of FIG. 4A), of the electronic device. In an embodiment, as shown in FIG. 5C, adhesive layers 575-1 and 575-2 to be connected to the second portion (e.g., the front frame 340) of the electronic device and the first connecting portion 571 of the electrical connecting member 570 may be disposed on two surfaces of the elastic member 580. In an embodiment, a (1-1)-th adhesive layer 575-1 including an adhesive material may be disposed on a surface (e.g., a surface facing the -c-axis direction of FIG. 5C) of the elastic member 580 opposite to the first connecting portion 571. The (1-1)-th adhesive layer 575-1 may be disposed between the elastic member 580 and the second portion (e.g., the front frame) of the electronic device to attach the elastic member 580 to the second portion (e.g., the front frame) of the electronic device. In an embodiment, a (1-2)-th adhesive layer 575-2 including an adhesive material may be disposed on a surface (e.g., a surface facing the +c-axis direction of FIG. 5C) of the elastic member 580 facing the first connecting portion 571. The (1-2)-th adhesive layer 575-2 may be disposed between the elastic member 580 and the first connecting portion 571 to attach the elastic member 580 to the first connecting portion 571.

In an embodiment, the second connecting portion 573 may be formed in a planar shape. In an embodiment, the second connecting portion 573 may extend from the bending portion 572 in the longitudinal direction L in a direction opposite to the first connecting portion 571. In an embodiment, at least a portion of a second surface (e.g., a surface facing the -c-axis direction of FIG. 5D) of the second connecting portion 573 may be fixed to the front frame (e.g., the front frame 340 of FIG. 4A). In an embodiment, the second connecting portion 573 may include a first adhesive area 573a, of which at least a portion is integrally connected to the second portion (e.g., the front frame) of the electronic device, and a second adhesive area 573b positioned between the first adhesive area 573a and the bending portion 572.

In an embodiment, one or more fixing spots 5731 may be formed in the first adhesive area 573a of the second connecting portion 573. In an embodiment, in a state in which the electrical connecting member 570 is connected to the second portion (e.g., the front frame) of the electronic device, the second connecting portion 573 may be integrally connected to the second portion (e.g., the front frame) of the electronic device through the fixing spots 5731. For example, the second connecting portion 573 may be integrally connected to the front frame by the fixing spots 5731 being welded to the front frame.

In an embodiment, the second connecting portion 573 may be attached to the second portion (e.g., the front frame) of the electronic device through the second adhesive area 573b. For example, the second connecting portion 573 may be integrally fixed to the front frame through the first adhesive area 573a and attached to the front frame through the second adhesive area 573b. A second adhesive layer 574 including an adhesive material may be disposed on the second connecting portion 573 in the second adhesive area 573b. The second adhesive layer 574 may attach the second connecting portion 573 to the second portion (e.g., the front frame) of the electronic device.

In an embodiment, the bending portion 572 may connect the first connecting portion 571 and the second connecting portion 573 along the longitudinal direction L. In an embodiment, the bending portion 572 may be at least partially bent in the thickness direction. In an embodiment, the bending portion 572 may have relatively higher flexibility in the thickness direction than the first connecting portion 571 and the second connecting portion 573. For example, the bending portion 572 may be more easily bent in the thickness direction than the first connecting portion 571 and the second connecting portion 573.

In an embodiment, the bending portion 572 may include one or more first through holes 5721 penetrating in the thickness direction of the electrical connecting member 570. In an embodiment, the first through holes 5721 may be formed in an elliptical shape with a major axis X1 parallel to the width direction W of the electrical connecting member 570. In an embodiment, the first through holes 5721 may facilitate the bending or deformation of the bending portion 572 when it is bent in the thickness direction. For example, the first through holes 5721 allow the bending portion 572 to bend in the thickness direction. In an embodiment, the plurality of first through holes 5721 may be formed in the bending portion 572. In an embodiment, the plurality of first through holes 5721 may be formed to be spaced apart along the longitudinal direction L of the bending portion 572. In an embodiment, a distance d between adjacent through holes of the plurality of first through holes 5721 in the longitudinal direction L may be constant. The through holes reduce the stress in the bending portion 572 that occurs when the bending portion 572 is bent or deformed.

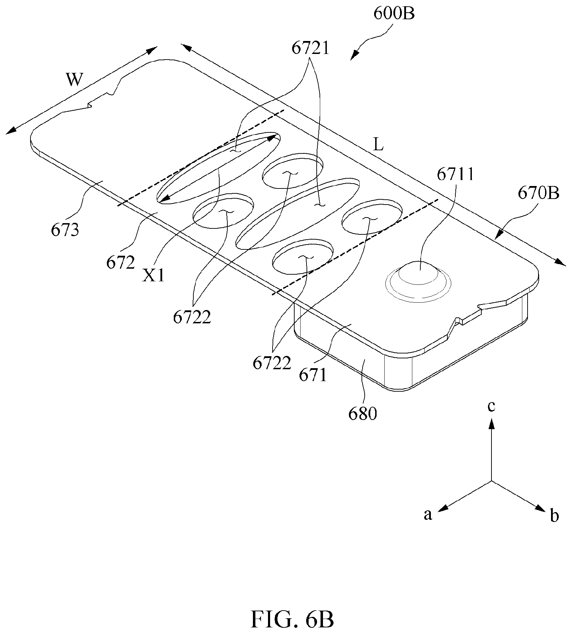

FIG. 6A is a perspective view of a conductive gasket according to an embodiment. FIG. 6B is a perspective view of a conductive gasket according to an embodiment;

Referring to FIG. 6A, in an embodiment, a conductive gasket 600A may include an electrical connecting member 670A and an elastic member 680.

The electrical connecting member 670A according to an embodiment may be formed as a plate with a length extending in a longitudinal direction L (e.g., the b-axis direction of FIG. 6A) and a width extending in a width direction W (e.g., the a-axis direction of FIG. 6A) orthogonal to the longitudinal direction L.

In an embodiment, the electrical connecting member 670A may include a first connecting portion 671, a second connecting portion 673, and a bending portion 672 connecting the first connecting portion 671 and the second connecting portion 673 in the longitudinal direction L. The first connecting portion 671 may include a contact protrusion 6711 protruding from a first surface (e.g., a surface facing the +c-axis direction of FIG. 6A). In an embodiment, the elastic member 680 may be disposed on a second surface (e.g., a surface facing the -c-axis direction of FIG. 6A) of the first connecting portion 671.

In an embodiment, at least a portion of the bending portion 672 may be bent in the thickness direction (e.g., the c-axis direction of FIG. 6A) along the longitudinal direction L. This means that the bending portion 672 that extends in the longitudinal direction L is deformed such that a part of the bending portion 672 is displaced or deformed in the thickness direction. The bending portion 672 may have lower stiffness in the thickness direction than the first connecting portion 671 and the second connecting portion 673. In effect, the bending portion 672 may have relatively higher flexibility than the first connecting portion 671 and the second connecting portion 673. In an embodiment, the bending portion 672 may include one or more first through holes 6721 and one or more second through holes 6722 penetrating in the thickness direction of the electrical connecting member 670A.

In an embodiment, the first through hole 6721 may be formed in an elliptical shape with a major axis X1 parallel to the width direction W of the electrical connecting member 670A. In an embodiment, the first through holes 6721 in the elliptical shape with the major axis X1 parallel to the width direction W may facilitate the bending of the bending portion 672 in the thickness of the conductive connecting member 670 along the longitudinal direction L.

In an embodiment, the second through hole 6722 may be formed to have a substantially circular shape. In an embodiment, a plurality of second through holes 6722 may be formed in the bending portion 672. The plurality of second through holes 6722 may be formed symmetrically with respect to the center of the bending portion 672 in the width direction W. For example, the plurality of second through holes 6722 may form pairs that are formed at the same distance from the bending portion 672 in the width direction W.

In an embodiment, the first through hole 6721 and the second through hole 6722 may facilitate the bending of the bending portion 672 along the longitudinal direction L. In an embodiment, one or more first through holes 6721 and the plurality of second through holes 6722 may be disposed in various shapes in the bending portion 672. For example, like the electrical connecting member 670A shown in FIG. 6A, one first through hole 6721 may be disposed at the center of the bending portion 672 in the longitudinal direction L, and the plurality of second through holes 6722 may be disposed symmetrically with respect to/around the first through hole 6721. In this case, the plurality of second through holes 6722 may be arranged in pairs and may be disposed symmetrically to the center of the bending portion 672 in the width direction W.

Referring to FIG. 6B, in an embodiment, a conductive gasket 600B may include an electrical connecting member 670B and the elastic member 680.

In an embodiment, the electrical connecting member 670B may include the first connecting portion 671, the second connecting portion 673, and the bending portion 672 connecting the first connecting portion 671 and the second connecting portion 673 in the longitudinal direction L. The first connecting portion 671 may include a contact protrusion 6711 protruding from a first surface (e.g., a surface facing the +c-axis direction of FIG. 6A). In an embodiment, the elastic member 680 may be disposed on a second surface (e.g., a surface facing the -c-axis direction of FIG. 6A) of the first connecting portion 671.

As shown in FIG. 6B, the plurality of first through holes 6721 may be formed in the bending portion 672 and may be disposed at intervals along the longitudinal direction L. In this case, the plurality of first through holes 6721 and pairs of the plurality of second through holes 6722 may be disposed alternately along the longitudinal direction L. It should be noted that the shape and arrangement of the through holes formed in the bending portion 672 are not limited to the form shown in the specific embodiment, and may be formed in various arrangements, shapes, and/or sizes to increase the flexibility of the bending portion 672.

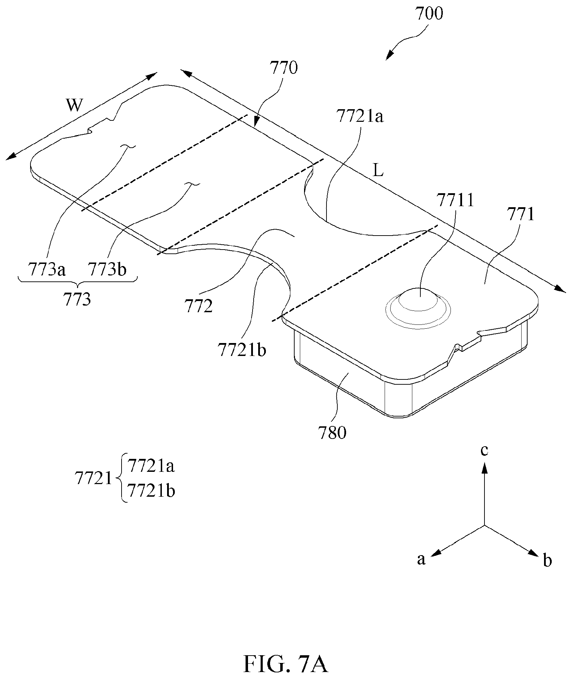

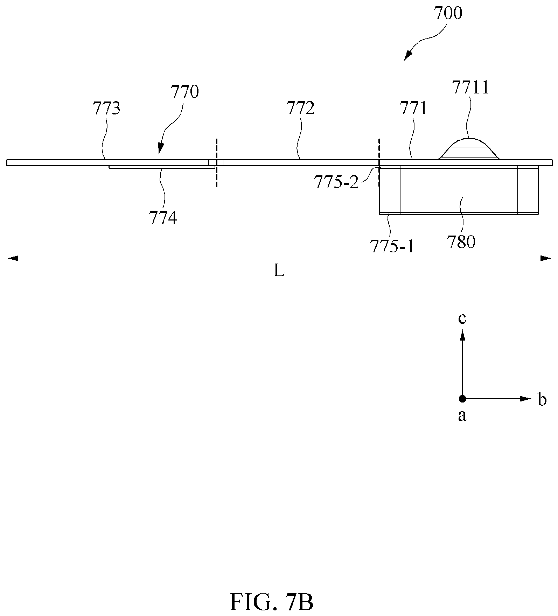

FIG. 7A is a perspective view of a conductive gasket according to an embodiment. FIG. 7B is a side view of a conductive gasket according to an embodiment.

In an embodiment, a conductive gasket 700 may include an electrical connecting member 770 that includes a conductive material, and an elastic member 780 connected to the electrical connecting member 770.

In an embodiment, the electrical connecting member 770 may have a length extending along a longitudinal direction L (e.g., the b-axis direction), a width extending along a width direction W (e.g., the a-axis direction) orthogonal to the longitudinal direction L, and a thickness extending along a thickness direction (e.g., a c-axis direction) orthogonal to the longitudinal direction L and the width direction W.

In an embodiment, the electrical connecting member 770 may include a first connecting portion 771, a second connecting portion 773, and a bending portion 772 connecting the first connecting portion 771 and the second connecting portion 773 in the longitudinal direction L.

In an embodiment, the first connecting portion 771 may include a contact protrusion 7711 protruding from a first surface (e.g., a surface facing the +c-axis direction of FIG. 7A). For example, the contact protrusion 7711 may be embossed on the first connecting portion 771. In an embodiment, a protruding surface of the contact protrusion 7711 may be formed as a curved surface so as to make point contact with a first portion (e.g., the conductive layer 362 of FIG. 4A) of an electronic device. In an embodiment, the elastic member 780 may be disposed on a second surface (e.g., a surface facing the -c-axis direction of FIG. 7A) of the first connecting portion 771. In an embodiment, a (1-1)-th adhesive layer 775-1 including an adhesive material may be disposed on a surface (e.g., a surface facing the -c-axis direction of FIG. 7B) of the elastic member 780 opposite to the first connecting portion 771. The (1-1)-th adhesive layer 775-1 may attach the elastic member 780 to a second portion (e.g., the front frame 340 of FIG. 4A) of the electronic device. In an embodiment, a (1-2)-th adhesive layer 775-2 including an adhesive material may be disposed between the first connecting portion 771 and the elastic member 780. The (1-2)-th adhesive layer 775-2 may attach the elastic member 780 and the first connecting portion 771 to each other.

In an embodiment, the second connecting portion 773 may be formed in a planar shape. In an embodiment, the second connecting portion 773 may include a first adhesive area 773a, of which at least a portion is integrally connected to the front frame, and a second adhesive area 773b. The second adhesive area may be positioned between the first adhesive area 773a and the bending portion 772, but is not limited to this position. In an embodiment, a second adhesive layer 774 including an adhesive material may be disposed on a second surface (e.g., a surface facing the -c-axis direction) of the second adhesive area 773b. The second adhesive layer 774 may attach a portion of the second connecting portion 773, for example, the second adhesive area 773b to the second (e.g., the front frame) portion of the electronic device.

In an embodiment, the bending portion 772 may be at least partially bent in the thickness direction. The bending portion 772 may have lower rigidity in the thickness direction than the first connecting portion 771 and/or the second connecting portion 773. For example, the bending portion 772 may have relatively higher flexibility, i.e., lower stiffness, than the first connecting portion 771 and/or the second connecting portion 773.

In an embodiment, the bending portion 772 may be formed so that one or more side portions 7721 of the bending portion 7742, i.e., the sides/side portions in the width direction W, are concave when viewed along the c-axis direction. In effect, the side portions 7721 include a cutout portion. In other words, the bending portion 772 is narrower than the first connecting portion 771 and the second connecting portion 773. In an embodiment, a first side portion 7721a and a second side portion 7721b of the bending portion 772 may be symmetrical to each other. In an embodiment, in FIG. 7A, the entire side portion 7721 of the bending portion 772 in the width direction W is shown in a concave shape. In other embodiments, only a portion of the side portion 7721 of the bending portion 772 in the width direction W may be formed in a concave form or a plurality of portions thereof may be formed in a concave form, i.e., there may be multiple cutout portions in the side portion 7721. In an embodiment, the first connecting portion 771 and the second connecting portion 773 may be wider than the bending portion 772, and thus a stress generated in the bending portion 772 due to the bending in the thickness direction may be smaller.

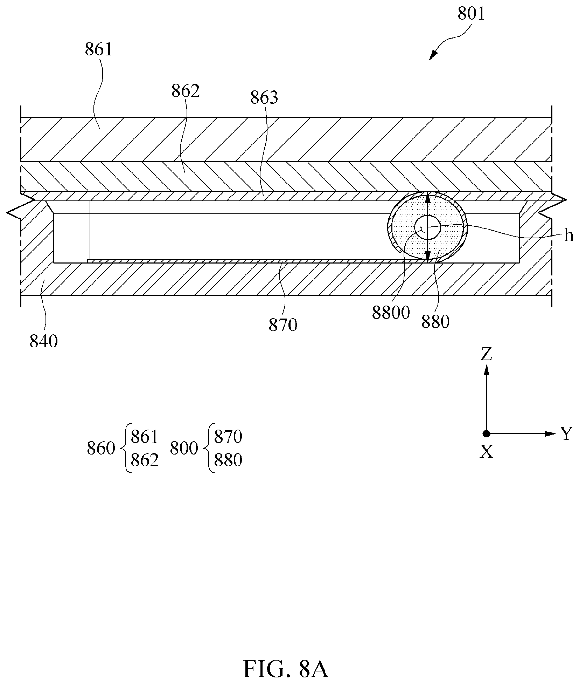

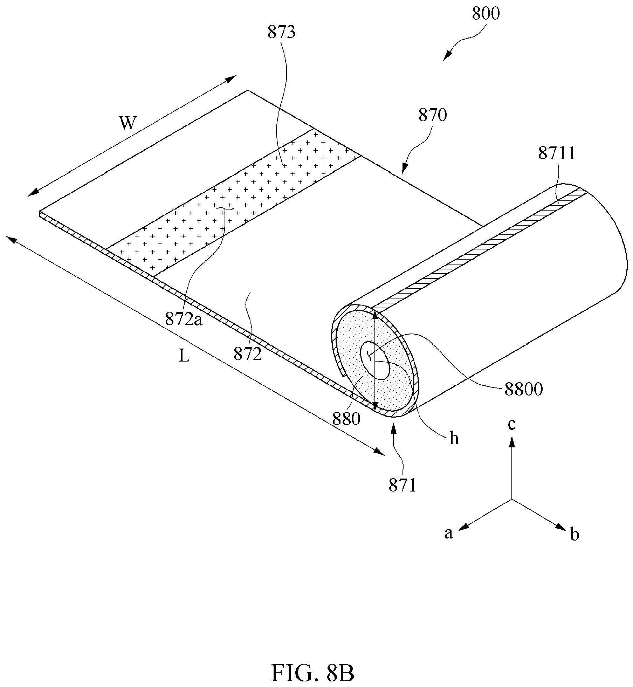

FIG. 8A is a partial cross-sectional view of an electronic device illustrating a conductive gasket according to an embodiment. FIG. 8B is a perspective view of the conductive gasket of FIG. 8A.

Referring to FIGS. 8A and 8B, an electronic device 801 according to an embodiment may include a housing (e.g., the housing 210 of FIG. 2A), a display 860 (e.g., the display 360 of FIG. 3), and a conductive gasket 800 (e.g., the conductive gasket 300 of FIG. 3).

In an embodiment, the housing may include a first surface, a second surface opposite to the first surface, and a side surface surrounding an inner space between the first surface and the second surface. In an embodiment, the housing may include a front frame 840 (e.g., the front frame 340 of FIG. 4A) that forms at least a portion of the side surface and supports components in an inner space of the electronic device 801. In an embodiment, the front frame 840 may include a conductive portion formed of a conductive material. In an embodiment, the conductive portion may function as a transmitter having an electrically conductive portion through which an electrical signal, i.e., an electrical current, flows.

In an embodiment, the display 860 may be disposed to be exposed on the first side of the electronic device 801. In an embodiment, the display 860 may be supported by the front frame 840. The display 860 may include a display member 861, and a conductive layer 862 forming a rear surface of the display 860.

In an embodiment, at least a portion of the display 860 may be connected to the front frame 840 through a connecting layer 863. At least a portion of the connecting layer 863 may be omitted so that the conductive gasket 800 may come into contact with the conductive layer 862.

In an embodiment, the conductive layer 862 may be disposed on the rear surface of the display member 861. The conductive layer 862 may include an electrically conductive material such as copper. In an embodiment, the conductive layer 862 may form one or more conductive areas for an electrical signal to flow along the rear area of the display 860.

In an embodiment, the conductive gasket 800 may be disposed inside the electronic device 801. The conductive gasket 800 may be disposed between a first portion and a second portion of the electronic device 801. For example, the conductive gasket 800 may be disposed between the front frame 840 and the conductive layer 862. In an embodiment, the conductive gasket 800 may include an electrical connecting member 870 and an elastic member 880.

In an embodiment, the electrical connecting member 870 may form an electrical path between the first portion and the second portion of the electronic device 801. For example, the electrical connecting member 870 may directly and/or electrically connect the conductive layer 862 and the front frame 840. Thus the electrical connecting member 870 forms an electrical path through which an electrical signal or current applied to the second portion may be transmitted to the first portion and vice versa. For example, an electrical signal or current applied to the conductive portion of the front frame 840 may be transmitted to the conductive layer 862 and vice versa.

In an embodiment, the electrical connecting member 870 may have a length extending along a longitudinal direction L, and a width extending along a width direction W orthogonal to the longitudinal direction L. In an embodiment, the electrical connecting member 870 may be formed in as a thin film including a first material. For example, the first material is conductive material. For example, the electrical connecting member 870 may have a thickness of about 0.01 mm.

As shown in FIGS. 8A and 8B, at least a portion of the electrical connecting member 870 may be wound around an outer surface of the elastic member 880. In an embodiment, the elastic member 880 may have a cylindrical shape with a circular cross-section, and may be hollow such that a hollow region 8800 is formed therein. In an embodiment, the elastic member 880 may be formed of a compressible elastic material. For example, the elastic member 880 may be formed of a compressible material such as polyurethane foam. In an embodiment, when the elastic member 880 receives pressure, the hollow region 8800 formed therein may be compressed and its shape, e.g., its cross-sectional shape, may be deformed. For example, as shown in FIG. 8A, when the elastic member 880 is disposed between the front frame 840 and the display 860, the elastic member 880 may be compressed in a height direction h (i.e., along the z-axis) and its shape may be deformed (e.g., compressed into an elliptical shape with a long side parallel to the Y axis).

In an embodiment, the electrical connecting member 870 may include a first connecting portion 871 of which at least a portion comes into contact with a first portion of the electronic device, for example, the conductive layer 862, a bending portion which is wound around an outer surface of the elastic member 880, and a second connecting portion 872 which extends from the first connecting portion 871 and is fixed to a second portion of the electronic device, for example, the front frame 840. In this embodiment, the first connecting portion 871 may include at least a part of the bending portion, as the first connection portion 871 is wound around an outer surface of the elastic member 880.

In an embodiment, the first connecting portion 871 may have a substantially circular cross section with the elastic member 880 as the center. The first connecting portion 871 may be compressed in the height direction h between the front frame 840 and the conductive layer 862 as shown in FIG. 8A, and may directly come into contact with the conductive layer 862 through a contact portion 8711 positioned on an outermost surface in the height direction. The first connecting portion 871 may be compressed in the height direction h due to the compression of the elastic member 880 and the elastic member 880 exert a force on the first connecting portion 871 in the height direction h, i.e., a restoring force from the elastic deformation. This compression allows the first connecting portion 871 to stably come into contact with the conductive layer 862. In this way, even when the gap/distance between the front frame 840 and the conductive layer 862 changes, the contact is maintained, improving the manufacturing tolerance.

In an embodiment, the second connecting portion 872 may extend from the first connecting portion 871 and/or the bending portion to contact with the front frame 840. In an embodiment, the second connecting portion 872 may include a fixing area 872a integrally connected to the front frame 840. For example, the fixing area 872a of the second connecting portion 872 may be welded to the front frame 840. In an embodiment, a fixing member 873 including a second material may be disposed in the fixing area 872a of the second connecting portion 872. In an embodiment, the second material may include nickel. In an embodiment, the electrical connecting member 870 is relatively thin. Accordingly, when the fixing area 872a of the second connecting portion 872 is connected to the front frame 840, the fixing member 873 may fuse and bond the fixing area 872a to the front frame 840 to integrally connect the fixing area 872a of the second connecting portion 872 to the front frame 840.

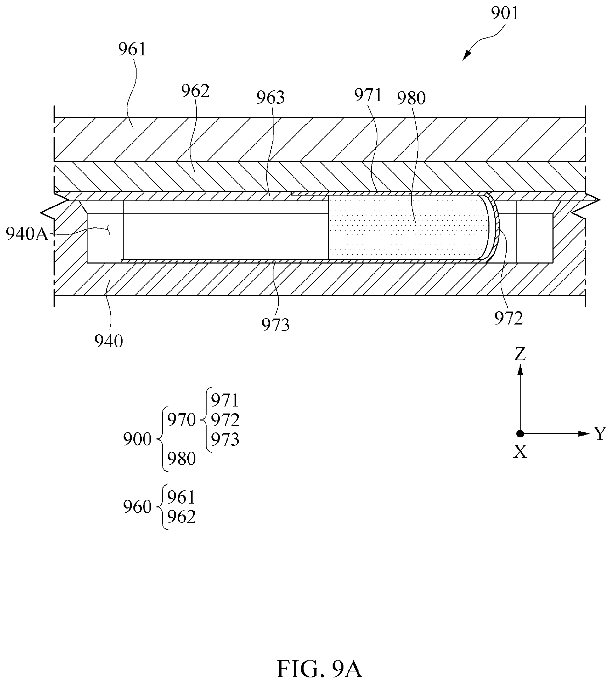

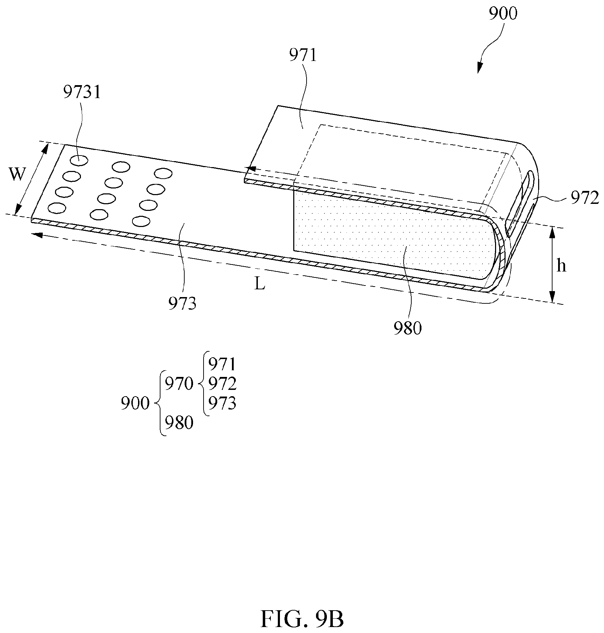

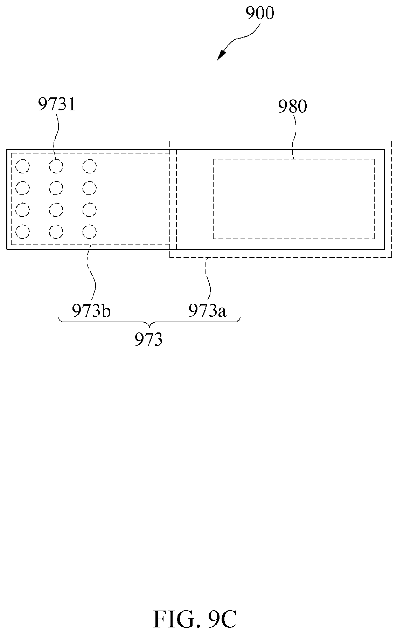

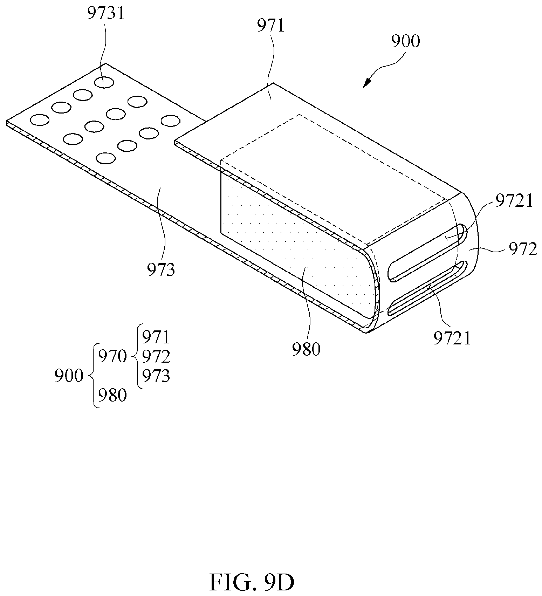

FIG. 9A is a partial cross-sectional view of an electronic device illustrating a conductive gasket according to an embodiment. FIG. 9B is a perspective view of the conductive gasket of FIG. 9A. FIG. 9C is a diagram illustrating the conductive gasket of FIG. 9Aas viewed from a first surface of an electrical connecting member. FIG. 9D is a perspective view of the conductive gasket of FIG. 9A illustrating a bending portion.

Referring to FIGS. 9A to 9D, an electronic device 901 (e.g., the electronic device 201 of FIG. 2A) according to an embodiment may include a housing (e.g., the housing 210 of FIG. 2A), a display 960 (e.g., the display 261 of FIG. 2A), and a conductive gasket 900.

In an embodiment, the housing may include a first surface, a second surface opposite to the first surface, and a side surface surrounding an inner space between the first surface and the second surface. In an embodiment, the housing may include a front frame 940 (e.g., the front frame 340 of FIG. 4A) that forms at least a portion of the side surface and supports components in an inner space of the electronic device 901. In an embodiment, the front frame 940 may include a conductive portion formed of a conductive material. In an embodiment, the conductive portion may function as a transmitter having an electrically conductive portion through which an electrical signal or current flows.

In an embodiment, the display 960 may be disposed on a first surface (e.g., in a +Z-axis direction of FIG. 9A) of the electronic device 901. In an embodiment, the display 960 may be supported by the front frame 940. In an embodiment, the display 960 may include a display member 961 for displaying a screen, and a conductive layer 962 disposed on a rear surface of the display member 961 and forming a rear surface of the display 960.

In an embodiment, at least a portion of the display 960 may be attached to the front frame 940 through a connecting layer 963. At least a portion of the connecting layer 963 may be omitted so that the conductive gasket 900 may come into contact with the conductive layer 962.

In an embodiment, the conductive layer 962 may be disposed on the rear surface of the display member 961. The conductive layer 962 may include an electrically conductive material such as copper. In an embodiment, the conductive layer 962 may form one or more conductive areas for an electrical signal to flow along the rear surface of the display 960.

In an embodiment, the conductive gasket 900 may be disposed inside the electronic device 901. In an embodiment, the conductive gasket 900 may be disposed between a first portion and a second portion of the electronic device 901 that are spaced apart from each other. For example, the conductive gasket 900 may be disposed between the conductive layer 962 and the front frame 940. For example, the conductive gasket 900 may be disposed in a recess 940A formed by the front frame 940. In an embodiment, the conductive gasket 900 may connect the first portion (e.g., the conductive layer 962) and the second portion (e.g., the front frame 940) of the electronic device 901.

In an embodiment, the conductive gasket 900 may include an electrical connecting member 970 that includes a conductive material, and an elastic member 980 connected to the electrical connecting member 970 which includes an elastic material.

In an embodiment, the electrical connecting member 970 may have a length extending along a longitudinal direction L, and a width extending along a width direction W orthogonal to the longitudinal direction L. The electrical connecting member 970 may form an electrical path between the first portion (e.g., the conductive layer 962) and the second portion (e.g., the front frame 940) of the electronic device.

In an embodiment, the electrical connecting member 970 may include a first connecting portion 971 that comes into contact with the first portion (e.g., the conductive layer 962) of the electronic device, a second connecting portion 973 that comes into contact with the second portion (e.g., the front frame 940) of the electronic device, and a bending portion 972 that connects the first connecting portion 971 and the second connecting portion 973 and is at least partially bent.

In an embodiment, the first connecting portion 971 may be disposed between the first portion (e.g., the conductive layer 962) and the elastic member 980 of the electronic device 901. Thus the first connecting portion 971 may be compressed against the first portion (e.g., the conductive layer 962) by the elastic member 980 so that a surface of the first connecting portion 971 comes into continuous/stable contact with the first portion (e.g., the conductive layer 962).

In an embodiment, the second connecting portion 973 may contact the second portion (e.g., the front frame 940) of the electronic device. The second connecting portion 973 may be spaced apart from the first connecting portion 971 in the Z direction, and may extend along the longitudinal direction L of the conductive connecting member 970. The bending portion 972 may be interposed between the first connecting portion 971 and the second connecting portion 973. The second connecting portion 973 may contact the second portion (e.g., the front frame 940) of the electronic device. In an embodiment, the second connecting portion 973 may include a (2-1)-th connecting portion 973a disposed between the elastic member 980 and the second portion (e.g., the front frame 940) of the electronic device, and a (2-2)-th connecting portion 973b extending from the (2-1)-th connecting portion 973a to an end of the elastic member 980 along the longitudinal direction L. In an embodiment, the (2-1)-th connecting portion 973a may face the first connecting portion 971 with the elastic member 980 interposed therebetween. In an embodiment, when the display 960 is viewed along the +Z-axis direction of FIG. 9A, the (2-1)-th connecting portion 973a overlaps the first connecting portion 971, and the (2-2)-th connecting portion 973b does not overlap the first connecting portion 971.

In an embodiment, at least a portion of the (2-2)-th connecting portion 973b may be fixed to the second portion (e.g., the front frame 940) of the electronic device. For example, the (2-2)-th connecting portion 973b may include one or more adhesive areas 9731 configured to be fixed to the front frame 940. In an embodiment, the (2-2)-th connecting portion 973b may be welded to the front frame 940 through the adhesive areas 9731.

In an embodiment, the bending portion 972 may connect the first connecting portion 971 and the second connecting portion 973. For example, the bending portion 972 may extend from the first connecting portion 971 to the (2-1)-th connecting portion 973a while surrounding at least a portion of the perimeter, e.g., the circumference, of the elastic member 980.

In an embodiment, at least a portion of the bending portion 972 may be partially bent. As described above, the bending portion 972 may be configured to have relatively higher flexibility than the first connecting portion 971 and/or the second connecting portion 973. In an embodiment, the amount that the bending portion 972 is bent varies with the distance between the first portion (e.g., the conductive layer 962) and the second portion (e.g., the front frame 940) of the electronic device 901. That is, when the distance therebetween is smaller, the bending portion 972 is more bent, and vice versa.

In an embodiment, the bending portion 972 may include one or more first through holes 9721 penetrating in a thickness direction of the electrical connecting member 970, i.e., in the Y-axis direction. In an embodiment, the first through hole 9721 may be formed to have a length in the X-axis direction shown in FIG. 9A that is smaller than a length in the Z-axis direction that is parallel to the width direction of the electrical connecting member 970. However, it should be noted that the shape, position, and/or number of the first through holes 9721 are not limited thereto.

In an embodiment, when the thickness of the electrical connecting member 970 is sufficiently thin, the first through hole 9721 is not provided in the bending portion 972.

In an embodiment, as the elastic member 980 is compressed between the first portion (e.g., the conductive layer 962) and the second portion (e.g., the front frame 940), the elastic member 980 may exert a force on the first connecting portion 971 in the direction of the first portion (e.g., the conductive layer 962) and a force on the second connecting portion 973 in the direction of the second portion (e.g., the front frame 940) of the electronic device.

## Claims

1. An electronic device (301) comprising:
a conductive gasket (300A) disposed between a first portion of the electronic device (301) and a second portion of the electronic device (301), wherein the first portion of the electronic device (301) and the second portion of the electronic device (301) are electrically conductive, and wherein the conductive gasket (300A) comprises:
an electrical connecting member (370A) extending between the first portion of the electronic device and the second portion of the electronic device and forming an electrical path therebetween; and
an elastic member (480) comprising an elastic material,
wherein the electrical connecting member (370A) comprises:
a first connecting portion (471) that contacts the first portion of the electronic device (301);
a second connecting portion (473) that contacts the second portion of the electronic device (301); and
a bending portion (472) extending from the first connecting portion (471) to the second connecting portion (473) and at least partially bent in a thickness direction of the electrical connecting member (370), and
wherein the elastic member (480) is disposed between the second portion of the electronic device (301) and the first connecting portion (471) and exerts a force on the first connecting portion (471) in a direction toward the first portion of the electronic device (301).

2. The electronic device of claim 1, wherein the first connecting portion (471) makes a point contact with the first portion of the electronic device (301).

3. The electronic device of one of claims 1 or 2, wherein the first connecting portion (471) comprises a contact protrusion (4711) protruding toward the first portion of the electronic device (301) and contacting the first portion.

4. The electronic device of one of claims 1 to 3, wherein the bending portion (472) is configured to have a lower stiffness than that of the first connecting portion (471) or the second connecting portion (473).

5. The electronic device of one of claims 1 to 4, wherein the bending portion (472) comprises a first through hole (5721) penetrating in the thickness direction of the electrical connecting member (370A).

6. The electronic device of claim 5, wherein the first through hole (5721) is formed in an elliptical shape having a major axis in a width direction orthogonal to both an extension direction of the electrical connecting member (370A) and the thickness direction of the electrical connecting member (370A).

7. The electronic device of one of claims 1 to 4, wherein
a plurality of first through holes (5721) are formed on the bending portion (472), and
the plurality of first through holes (5721) are disposed to be spaced apart in an extension direction of the electrical connecting member (570).

8. The electronic device of one of claims 1 to 7, wherein the bending portion (672) comprises a plurality of second through holes (6722) penetrating in the thickness direction of the electrical connecting member (670A) and having a substantially circular shape.

9. The electronic device of one of claims 1 to 8, wherein, the bending portion (772) is narrower than the first connecting portion (771) and the second connecting portion (773).

10. The electronic device of one of claims 1 to 9, wherein the electrical connecting member (370A) comprises:
a base layer (5701) formed of a first material; and
a surface layer (5702) covering an outer surface of the base layer (5701) and formed of a second conductive material (5702).

11. The electronic device of one of claims 1 to 10, wherein
the first portion of the electronic device (301) is a conductive layer (362) of a display (360) of the electronic device (301), and
the second portion of the electronic device (301) is a front frame (340) of the electronic device (301), wherein the front frame (340) comprises a conductive portion.

12. The electronic device of one of claims 1 to 11, further comprising:
a (1-1)-th adhesive layer (575-1) disposed between the elastic member (580) and the second portion; and
a (1-2)-th adhesive layer (575-2) disposed between the elastic member (580) and the first connecting portion (571) of the electrical connecting member (570).

13. The electronic device of one of claims 1 to 12, wherein the second connecting member (573) comprises:
a first adhesive area (573a) of which at least a portion is integrally connected with the first portion of the electronic device (301); and
a second adhesive area (573b) positioned between the first adhesive area (573a) and the bending portion (572).

14. The electronic device of claims 13, further comprising:
a second adhesive layer (574) disposed between the second adhesive area (573b) of the second connecting portion (573) and the second portion of the electronic device (301).

15. The conductive gasket (300) of any preceding claim.
